# EUROPEAN PATENT SPECIFICATION

(11) **EP 3 759 398 B1**
(45) Date of publication and mention of the grant of the patent: **01.01.2025**
(21) Application number: 19708880.0
(22) Date of filing: 12.02.2019
(51) Int. Cl.: F24D 19/00, E03B 7/07, C02F 1/32, F24D 3/10, E03C 1/10

(54) **FLUID CIRCUIT FILLING APPARATUS AND METHOD**
FÜLLAPPARATUS FÜR EIN FLUSSIGKEITSKREISLAUF UND VERFAHREN
DISPOSITIF DE REMPLISSAGE DE FLUIDE DANS UN CIRCUIT ET MÉTHODE

(30) Priority: 27.02.2018 GB 201803136
(43) Date of publication of application: 06.01.2021
(73) Proprietor: Vexo International (UK) Limited, London E1 7NJ (GB)
(72) Inventor: COWLEY, Richard, St Francis Bay 6312 Eastern Cape (ZA); WILKINSON, Darren, Arlesey, Bedfordshire SG15 6UR (GB)
(74) Representative: Bryers Intellectual Property Ltd
(86) International application number: PCT/GB2019/050366
(87) International publication number: WO 2019/166766

(56) References cited:
- EP-A1- 2 272 802
- WO-A1-2015/067917
- WO-A1-97/13042
- WO-A2-2017/129989
- GB-A- 2 115 911
- GB-A- 2 551 192
- US-A1- 2006 006 104

## Description

### Field of the Invention

The present invention relates to fluid circuit filling, in particular to apparatus for and a method of supplying a flow of top-up liquid to a fluid circuit of a heating or a cooling system, and also to maintaining a condition of liquid in the fluid circuit of the heating or the cooling system.

### Background of the Invention

Heating systems and cooling systems are known that comprise a fluid circuit through which a fluid circulates under pressure. An example of this type of system is a closed circuit central heating system, in which system water flows in a loop from a boiler, through a series of hot-water radiators, and then back to the boiler.

A problem found with closed circuit systems is that the circulating liquid can become contaminated, resulting in a reduction in the performance efficiency of the heating or cooling system and possibly also leading to total system failure. The most common sources of contaminants in the circulating liquid are: corrosion, lime scale and microbiological growths (bacteria or fungi). Debris and sludge in the circulating liquid of a heating or cooling system can lead to blockages, leakage, and premature system failure.

Approaches to addressing the problem of circulating liquid contamination include flushing of the system to remove any debris in the fluid circuit, and introducing a treatment additive, such as an inhibitor, into circulating liquid for the purpose of preventing or resolving contamination build-up.

Fluid treatment apparatus for treating fluid in a fluid circuit of a heating or cooling system, and a method of treating fluid in a fluid circuit of a heating or cooling system, are disclosed in UK Patent No. GB 2503762 B.

Heating systems and cooling systems are usually manufactured from steel and other common metals, and when these metals come into contact with the circulated fluid, they often corrode. Corrosion in such systems is common and unless the incidence thereof is inhibited or resultant rust or detritus particles removed, system components can become clogged or blocked, which can eventually lead to a severe loss of system efficiency and further deterioration that can result in leaks arising in the system and a total system failure. Thus, corrosion impacts negatively on the efficiency of heating and cooling systems, and causes the primary energy input required to run such systems to increase.

A known practice is to add a corrosion inhibitor into the system water to alleviate the further corrosion of internal parts of system components and materials, and it is industry recommended to add an inhibitor whenever there is a loss of pressure in the system fluid, at which point new, untreated fluid will be introduced into the system to top it up.

The introduction of bacteria, such as Pseudomonas, into a heating system or especially a cooling system via incoming mains fresh water used as a system top-up fluid is another commonly known problem.

These bacteria can and do multiply within the system fluid, resulting in the formation of a 'slime', which can eventually lead to the blocking of internal parts of system components and can result in failures. Thus, the presence of bacteria impacts negatively on the efficiency of heating and cooling systems, and causes the primary energy input required to maintain the original design criteria to increase.

Also, many heating and cooling systems are sealed from the environmental atmosphere and are designed to be at a positive pressure to function properly. During the lifetime of the system, it may be drained for maintenance purposes or may suffer from small leaks of system fluid from the system joints and components. The loss of system fluid will result in a lowering of the designed pressure of the system fluid, resulting in poor system fluid circulation and potential catastrophic failure of some of the system components. Therefore, pressure loss is a critical factor in the efficiency of these types of systems.

Patent Publication No. GB 2115911 A discloses means for making up, automatically, losses of water from a sealed and pressurised boiler heated water system, which includes a pump for pumping water into the system and timing means to prevent operation of the pump continuously, for more than a predetermined period. Patent Publication No. WO 2017/ 129989 A2 discloses a modular treatment apparatus configured, in use, to treat a heating and/or cooling system, which comprises two or more modules selected from: (i) a filter module; (ii) a sampling module; (iii) a power flushing module; (iv) a combined sampling and power flushing module; (v) a UV module; and (vi) a dosing module.

### Summary of the Invention

According to a first aspect of the invention there is provided a heating or a cooling system comprising a fluid circuit and apparatus to supply a flow of top-up liquid to the fluid circuit of the heating or the cooling system, said apparatus comprising: a liquid reservoir comprising an inlet port connected to a liquid source for supplying the liquid reservoir with a liquid, and an outlet; an outlet port connected to the fluid circuit, and a pump operable to move liquid from said liquid reservoir to said outlet port along a flow path; characterised in that said apparatus further comprises a light source configured to emit ultraviolet light incident on liquid flowing from said liquid reservoir to said outlet port along said flow path.

The light source may comprise one or more lamps configured to emit UV light.

The light source may be configured to emit ultraviolet light incident on liquid flowing from the liquid reservoir to the outlet port at a position along the flow path that is upstream of the pump.

The apparatus may further comprise a dosing valve for connection to an outlet of an additive reservoir such that the dosing valve is operable to supply a flow of an additive from the additive reservoir to liquid flowing from the liquid reservoir to the outlet port along the flow path.

The dosing valve may be configured to supply a flow of an additive from the additive reservoir to liquid flowing from the liquid reservoir to the outlet port along the flow path at a position along the flow path that is downstream of the pump.

The dosing valve may be a proportional dosage valve.

The liquid source may be a cold mains water supply.

According to a second aspect of the invention there is provided a method of supplying a flow of top-up liquid to a fluid circuit of a heating or a cooling system, the heating or a cooling system according to the first aspect, said method comprising the steps of: (a) measuring a pressure level of system liquid in the fluid circuit to obtain a pressure level indication; (b) comparing the pressure level indication obtained at step (a) with a pressure level threshold to determine whether the pressure level indication exceeds the pressure level threshold; and (c) in response to determining at step (b) that the pressure level indication exceeds the pressure level threshold, repeating steps (a) and (b), or (d) in response to determining at step (b) that the pressure level indication does not exceed the pressure level threshold, generating an activation signal to initiate a system filling routine to supply a flow of liquid from the liquid reservoir to the outlet port connected to the fluid circuit, wherein the flow of liquid from the liquid reservoir is treated by ultraviolet light incident thereon before passing through said outlet port.

The method may further comprise the steps of: (e) measuring a pressure level of system liquid in the fluid circuit to obtain a subsequent pressure level indication; (f) comparing the subsequent pressure level indication obtained at step (e) with said pressure level threshold to determine whether the subsequent pressure level indication exceeds the pressure level threshold; and (g) in response to determining at step (f) that the subsequent pressure level indication does not exceed the pressure level threshold, repeating steps (e) and (f), or (h) in response to determining at step (f) that the subsequent pressure level indication exceeds the pressure level threshold, generating a deactivation signal to conclude said system filling routine and repeating steps (a) and (b).

During the system filling routine, a flow of an additive from an additive reservoir may be supplied to the flow of liquid from the liquid reservoir to the outlet port along the flow path.

During the system filling routine, the flow of liquid from the liquid reservoir to the outlet port may be supplied under the operation of the pump, and the flow of an additive is supplied to the flow of liquid from the liquid reservoir to the outlet port at a position along the flow path that is downstream of the pump.

The additive may comprise a corrosion inhibitor.

The liquid reservoir may be connected to a cold mains water supply.

Further particular and preferred aspects of the invention are set out in the accompanying dependent claims.

### Brief Description of the Drawings

The present invention will now be more particularly described, with reference to the accompanying drawings, in which:
**Figure 1** shows a schematic of a fluid circuit of a heating system, the heating system comprising apparatus for supplying a flow of liquid to the fluid circuit; and
**Figure 2** shows a schematic of apparatus for supplying a flow of liquid to a fluid circuit of a heating or a cooling system.

### Description

Illustrative embodiments and examples are described below in sufficient detail to enable those of ordinary skill in the art to embody and implement the apparatus, systems and/or processes described herein. It is to be understood that embodiments and examples can be provided in many alternate forms and the invention should not be construed as limited to the embodiments and examples set forth herein but by the scope of the appended claims.

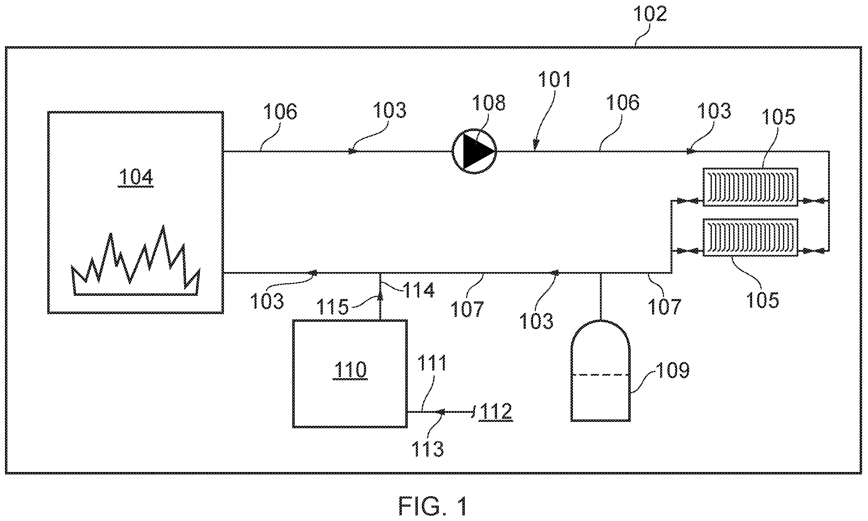

A fluid circuit 101 of an example heating system 102 is shown in **Figure 1**. The direction of circulating flow of system liquid around the fluid circuit 101 is indicated by arrows 103. Heating system 102 comprises a heat source 104, such as a boiler, and at least one heat emitter 105, such as a radiator. A main system flow pipe 106 extends from the heat source 104 to the at least one heat emitter 105, and a main system return pipe 107 extends from the at least one heat emitter 105 to the heat source 104.

Heating system 102 comprises a system pump 108, which is disposed along main system flow pipe 106 between the heat source 104 and the at least one heat emitter 105, and which is operable to circulate system liquid around the fluid circuit 101 in the direction of circulating flow 103. In this illustrated example, heating system 102 further comprises an expansion vessel 109, which is disposed along main system return pipe 107 between at least one heat emitter 105 and the heat source 104.

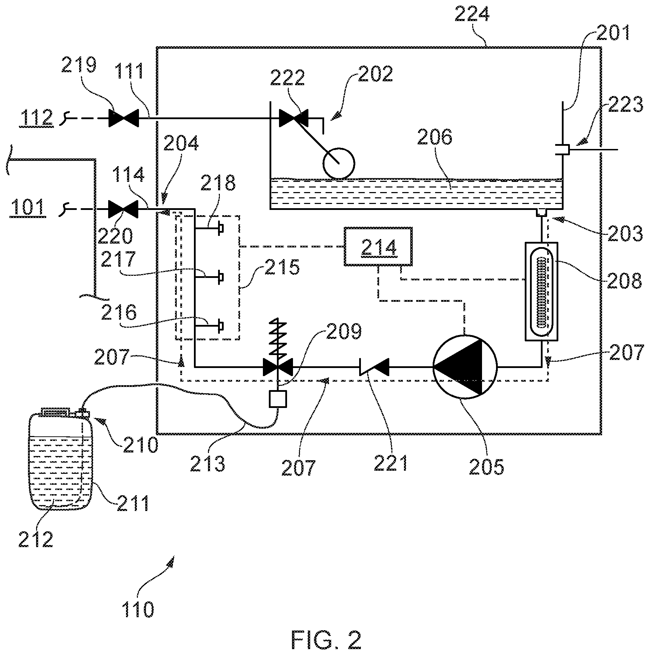

Apparatus 110 is also shown in **Figure 1****,** which is illustrated in further detail in **Figure 2****.**

As will be explained, the apparatus 110 is usable to supply a flow of liquid to a fluid circuit of a heating or a cooling system, in particular to supply a flow of top-up liquid to a fluid circuit of a heating or a cooling system.

Apparatus 110 is arranged to receive liquid via a fluid conduit I I I that is connected to a liquid source 112, in a direction of inflow 113, and to supply liquid to the fluid circuit 101 via a fluid conduit 114 that is connected to the main system return pipe 107, in a direction of outflow 115.

The apparatus 110 is provided for supplying a flow of liquid to the fluid circuit 101 of the heating system 102, in particular for supplying a flow of top-up liquid to the fluid circuit 101.

Features of apparatus 110 will now be described in further detail with reference to **Figure 2****.**

Apparatus 110 comprises a liquid reservoir 201, which comprises an inlet port 202 and an outlet 203. The inlet port 202 of the liquid reservoir 201 is fluidly connectable to a liquid source for supplying the liquid reservoir 201 with a liquid. In the shown arrangement, the liquid reservoir 201 is connected to liquid source 112 via fluid conduit 111. According to this illustrated embodiment, liquid source 112 is a cold mains water supply. The liquid source may however be any suitable alternative source of any suitable alternative liquid. The liquid reservoir 201 may be any suitable type, for example a storage tank.

The apparatus 110 also comprises an outlet port 204 connectable to the fluid circuit 101. In the shown arrangement, the outlet port 204 is connected to fluid circuit 101 via fluid conduit 114.

Apparatus 110 further comprises a pump 205, which is operable to move liquid 206 from the liquid reservoir 201 to the outlet port 204 along a flow path, indicated generally by arrows 207 that also indicate the direction of flow. In the shown arrangement, the pump 205 is located downstream of the outlet 203 of the liquid reservoir 201. The pump 205 may be any suitable type.

Advantageously, the apparatus 110 further comprises a light source 208 configured to emit ultraviolet (UV) light incident on liquid 206 flowing from the liquid reservoir 201 to the fluid circuit 101 along the flow path 207. Thus, liquid 206 from the liquid reservoir 201 is treated with UV rays before entering the fluid circuit 101. This UV light functions to destroy bacteria present within liquid 206 flowing from the liquid reservoir 201 before it is introduced into the fluid circuit 101. This ensures that a desired bacteria-free condition of the system water is maintained.

As previously stated, according to this illustrated embodiment, the liquid 206 flowing along the flow path 207 originates from a cold mains water supply, and the UV beam incident thereon from the light source 208 functions to kill bacteria within this fresh water. In this way, bacteria are prevented from entering the system fluid when the fluid circuit 101 is being topped-up.

This feature of the apparatus 110 is of significant benefit when the temperature of the system fluid is not high enough to kill bacteria through heat alone. For example, bacteria in liquid flowing into a fluid circuit of a heating system in which the system fluid is at a temperature of 60 degrees or higher can be destroyed by the heat of the existing system fluid but bacteria in liquid flowing into a fluid circuit of a cooling system in which the system fluid is at a temperature of below 60 degrees would not be destroyed in the same way.

According to the shown arrangement, the light source 208 is configured to emit ultraviolet light incident on liquid 206 flowing from the liquid reservoir 201 to the fluid circuit 101 at a position along the flow path 207 that is upstream of the pump 205. This particular siting of the light source 208 serves to inhibit the flow of live bacteria into the pump 205, which hinders bacterial growth on internal surfaces of the pump 205. However, it is to be appreciated that the light source 208 may be sited at any suitable location to ensure that liquid 206 from the liquid reservoir 201 is subjected to UV light emitted therefrom before entering the fluid circuit 101. Thus, the light source 208 may be located downstream of the pump 205.

The light source 208 may be any suitable light source operable to emit ultraviolet light. The light source 208 may comprise only one or more than one UV light emitting lamps, of any suitable type. The light source 208 may have any suitable shape and dimensions. The light source 208 may be arranged relative to the flow path 207 in any suitable way. It is to be appreciated that any physical barrier between a UV light emitting lamp of the light source 208 and liquid 206 flowing from the liquid reservoir 201 will allow an appropriate transmission of the desired light wavelength or wavelengths therethrough. It is hence to be understood that the selection of a material or materials for defining a conduit through which liquid 206 can travel from the liquid reservoir 201 to the outlet port 204 will involve the identification of a material having suitable light transmittance properties.

Beneficially, in this embodiment, the apparatus 110 further comprises a dosing valve 209 for connection to an outlet 210 of an additive reservoir 211 such that the dosing valve 209 is operable to supply a flow of an additive 212 from the additive reservoir 211 to liquid 206 flowing from the liquid reservoir 201 to the outlet port 204 along the flow path 207. Thus, liquid 206 from the liquid reservoir 201 is dosed with an additive before entering the fluid circuit 101. This ensures that a desired additive-concentration condition of the system water is maintained.

As previously stated, according to this illustrated embodiment, the liquid 206 flowing along the flow path 207 originates from a cold mains water supply, and the dosing valve 209 functions to dose this fresh water with the additive 212. In this way, the additive 212 is introduced into the liquid 206 prior to entering the system fluid when the fluid circuit 101 is being topped-up.

This feature of the apparatus 110 is of significant benefit when system fluid may be lost through leakage or maintenance draining. For example, introducing an amount of additive 212 as liquid 206 enters the fluid circuit 101 serves to ensure that protection is provided at the earliest stage and also enables an amount of additive 212 to be introduced into the existing system fluid to supplement an existing concentration of the additive 212 therein.

The dosing valve 209 may be any suitable type. In an embodiment, the dosing valve 209 is a proportional dosage valve. The additive 212 may be any suitable type. In an embodiment, the additive 212 is a corrosion inhibitor. According to the shown arrangement, a fluid conduit 213, which in this example is a flexible fluid conduit, extends from the dosing valve 209 into the additive 212. The additive reservoir 211 may be any suitable type, for example a chemical container.

In the shown arrangement, the dosing valve 209 is located downstream of the pump 205. It is to be appreciated however that the dosing valve 209 may be sited at any suitable position for introducing the additive 212 to liquid 206 flowing to the fluid circuit 101.

The apparatus 110 further comprises a controller 214. The controller 214 is operable to control steps in a method of supplying a flow of top-up liquid to a fluid circuit of a heating or a cooling system. The controller 214 may be any suitable device, for example a programmable logic controller (PLC).

Controller 214 is configured to receive an input from a pressure sensing arrangement 215, which comprises at least one pressure sensor arranged to sense the pressure of system water within the fluid circuit 101. The or each pressure sensor of the pressure sensing arrangement 215 may be of any suitable type and may be located at any suitable position. It is to be appreciated that a pressure sensor of the pressure sensing arrangement 215 may be located within the flow path 207 or alternatively the fluid circuit 101.

According to this illustrated embodiment, the apparatus 110 comprises the pressure sensing arrangement 215, and the pressure sensing arrangement 215 comprises a plurality of pressure sensors 216, 217, 218. In this specific example, the pressure sensing arrangement 215 comprises a low-pressure transducer/switch 216, a high-pressure transducer/switch 217 and a pump pressure transducer/switch 218. As shown, these pressure sensors 216, 217, 218 are arranged in series along the flow path 207. In the specific illustrated arrangement, the pressure sensors 216, 217, 218 are positioned between the dosing valve 209 and the outlet port 204, ordered in the direction of flow from the liquid reservoir 201 to the fluid circuit 101.

As indicated, controller 214 is also in communication with the pump 205 and the light source 208.

Further features of the illustrated embodiment will now be mentioned. An isolation valve 219 is disposed between the liquid source 112 and the inlet port 202, and a pressurised isolation valve 220 is disposed between the outlet port 204 and the fluid circuit 101. A non-return valve 221 is disposed between the pump 205 and the dosing valve 209, to prevent the flow of liquid 206 back towards the pump 205. The liquid reservoir 201 is provided with a float operated valve 222 and an overflow connection 223.

A cabinet 224 for housing some or all of the various components of the apparatus 110 is also shown. According to the illustrated embodiment, connections to componentry within the cabinet 224 are made via fluid conduit I I I (connection between liquid source 112 and inlet port 202), fluid conduit 114 (connection between fluid circuit 101 and outlet port 204) and fluid conduit 213 (connection between flow path 207 and additive reservoir 211). The use of a cabinet 224 provides for convenient introduction of the apparatus 110 to a heating or a cooling system. The cabinet 224 may be any suitable shape and have any suitable dimensions, and may be fabricated from any suitable material or combination of materials.

Apparatus 110 functions to assist system fluid of a fluid circuit of a heating or a cooling system to be maintained at a desired pressure and at a desired extent of dosing.

It is to be appreciated that each of the light source 208 and the dosing valve 209 of an apparatus 110 as described herein will be located, with reference to the illustrated arrangement of **Figure 2**, upstream of the isolation valve 220, to ensure that top-up liquid supplied by the apparatus 110 is treated before being introduced into the fluid circuit 101 and equally to ensure that system fluid of the fluid circuit 101 is exposed to top-up liquid that has already been treated.

Steps in a method of supplying a flow of top-up liquid to a fluid circuit of a heating or a cooling system will now be described.

A pressure level of system liquid in the fluid circuit is measured to obtain a pressure level indication. This pressure level indication is then compared with a pressure level threshold to determine whether the pressure level indication exceeds the pressure level threshold.

In response to determining, from the comparison, that the pressure level indication exceeds the pressure level threshold, the previous steps of measuring a pressure level of system liquid in the fluid circuit to obtain a pressure level indication and then comparing this pressure level indication with the pressure level threshold to determine whether the pressure level indication exceeds the pressure level threshold are repeated.

In response to determining, from a comparison of a pressure level indication with the pressure level threshold, that the pressure level indication does not exceed the pressure level difference threshold, an activation signal is generated to initiate a system filling routine to supply a flow of liquid from a liquid reservoir to an outlet port connected to the fluid circuit.

Thus, the pressure level of system liquid in the fluid circuit is measured and when a drop in the system liquid pressure is detected, a system filling routine is initiated to restore the system liquid pressure to a desired operating pressure level.

Further steps in the method of supplying a flow of top-up liquid to a fluid circuit of a heating or a cooling system will now be described.

A pressure level of system liquid is then measured to obtain a subsequent pressure level indication. This subsequent pressure level of system liquid is then compared with the pressure level threshold to determine whether the subsequent pressure level indication exceeds the pressure level threshold.

In response to determining, from the comparison, that the subsequent pressure level indication does not exceed the pressure level threshold, the previous steps of measuring a pressure level of system liquid in the fluid circuit to obtain a subsequent pressure level indication and then comparing this subsequent pressure level indication with the pressure level threshold to determine whether the subsequent pressure level indication exceeds the pressure level threshold are repeated.

In response to determining, from a comparison of a subsequent pressure level indication with the pressure level threshold, that the subsequent pressure level indication exceeds the pressure level difference threshold, a deactivation signal is generated to conclude the system filling routine and the previous steps of measuring a pressure level of system liquid in the fluid circuit to obtain a pressure level indication and then comparing this pressure level indication with the pressure level threshold to determine whether the pressure level indication exceeds the pressure level threshold are repeated.

Thus, during the period that the system filling routine is active, the pressure level of system liquid in the fluid circuit is measured and when the desired operating pressure level is again detected, when the system liquid has been properly topped-up, the system filling routine is ceased and monitoring of the pressure level of system liquid in the fluid circuit to detect any drop in the system liquid pressure is again performed.

The flow of liquid from the liquid reservoir during the system filling routine is treated by ultraviolet light incident thereon before entering the fluid circuit. In an embodiment, the flow of liquid from the liquid reservoir is treated by ultraviolet light incident thereon before passing through an outlet port connected to the fluid circuit.

The UV light serves to destroy bacteria within the top-up liquid before it is supplied into the fluid circuit.

In an embodiment, the step of activating the system filling routine involves the controller 214 activating the pump 205 to begin pumping liquid 206 from the liquid reservoir 201 and the step of deactivating the system filling routine involves the controller 214 deactivating the pump 205 to stop pumping liquid 206 from the liquid reservoir 201.

In an embodiment, the step of activating the system filling routine involves the controller 214 switching on the light source 208 to begin emitting UV light, and activating the pump 205 to begin pumping liquid 206 from the liquid reservoir 201 and the step of deactivating the system filling routine involves the controller 214 deactivating the pump 205 to stop pumping liquid 206 from the liquid reservoir 201, and switching off the light source 208 to stop emitting UV light.

In an embodiment, alternatively or additionally, during the period that the system filling routine is active, a flow of an additive is supplied to the flow of liquid from the liquid reservoir before entering the fluid circuit. In an embodiment, the flow of liquid from the liquid reservoir is dosed with an additive before passing through an outlet port connected to the fluid circuit.

In an embodiment, the additive is a corrosion inhibitor, which serves to prevent the creation of corrosion particles that may cause damage to the heating or the cooling system.

In an embodiment, during the system filling routine, the flow of liquid from the liquid reservoir to the outlet port connected to the fluid circuit is supplied under the operation of a pump, and the flow of an additive is supplied to the flow of liquid from the liquid reservoir to the outlet port at a position along the flow path that is downstream of the pump.

Thus, in an embodiment, liquid flowing from the liquid reservoir is treated with UV light before entering the pump and is dosed with an additive after exiting the pump.

It is to be appreciated that in an embodiment in which the apparatus 110 comprises the light source 208 and additionally the dosing valve 209 that only the light source 208 may be deployed and therefore liquid flowing from the liquid reservoir during a system filling routine may be treated with UV light via the light source 208 and optionally also dosed with an additive via the dosing valve 209.

Further it is to be appreciated that in an embodiment, the apparatus 110 comprises only the light source 208 and not also the dosing valve 209.

Therefore, in a method of supplying a flow of top-up liquid to a fluid circuit of a heating or a cooling system using apparatus as described, a flow of top-up liquid to the fluid circuit may be treated with UV light or treated with UV light and dosed with an additive.

Apparatus for, and a method of, supplying a flow of top-up liquid to a fluid circuit of a heating or a cooling system is disclosed. A system filling routine initiated in response to detection of a drop in a pressure level of system liquid in the fluid circuit is also disclosed. A light source operable to treat the top-up liquid with ultraviolet light prior to entering the fluid circuit, and a dosing valve operable to dose the top-up liquid with an additive prior to entering the fluid circuit are further disclosed.

Although illustrative embodiments and example of the invention have been disclosed in detail herein, with reference to the accompanying drawings, it is to be understood that the invention is not limited to the precise embodiment and examples shown and/or described and that various changes and modifications can be effected therein by one skilled in the art without departing from the scope of the invention as defined by the appended claims.

## Claims

1. A heating or a cooling system (102) comprising a fluid circuit (101) and apparatus (110) to supply a flow of top-up liquid to the fluid circuit (101) of the heating or the cooling system (102), said apparatus (110) comprising:
a liquid reservoir (201) comprising an inlet port (202) connected to a liquid source (112) for supplying the liquid reservoir (201) with a liquid (202), and an outlet (203);
an outlet port (204) connected to the fluid circuit (101), and
a pump (205) operable to move liquid (206) from said liquid reservoir (201) to said outlet port (204) along a flow path (207); **characterised in that**
said apparatus (110) further comprises a light source (208) operable to emit ultraviolet light incident on liquid (206) flowing from said liquid reservoir (201) to said outlet port (204) along said flow path (207).

2. A heating or a cooling system (102) as claimed in claim 1, wherein said light source (208) is configured to emit ultraviolet light incident on liquid (206) flowing from said liquid reservoir (201) to said outlet port (204) at a position along said flow path (207) that is upstream of said pump (205).

3. A heating or a cooling system (102) as claimed in claim I or claim 2, further comprising a dosing valve (209) for connection to an outlet (210) of an additive reservoir (211) such that the dosing valve (209) is operable to supply a flow of an additive (212) from the additive reservoir (211) to liquid (206) flowing from said liquid reservoir (201) to said outlet port (204) along said flow path (207).

4. A heating or a cooling system (102) as claimed in claim 3, wherein said dosing valve (209) is operable to supply a flow of an additive (212) from the additive reservoir (211) to liquid (206) flowing from said liquid reservoir (211) to said outlet port (204) along said flow path (207) at a position along said flow path (207) that is downstream of said pump (205).

5. A heating or a cooling system (102) as claimed in claim 3 or claim 4, wherein said dosing valve (209) is a proportional dosage valve.

6. A heating or a cooling system (102) as claimed in any of claims I to 5, wherein said liquid source (112) is a cold mains water supply.

7. A method of supplying a flow of top-up liquid to a fluid circuit (102) of a heating or a cooling system (102), the heating or a cooling system (102) as claimed in claim 1, said method comprising the steps of:
(a) measuring a pressure level of system liquid in the fluid circuit (101) to obtain a pressure level indication;
(b) comparing the pressure level indication obtained at step (a) with a pressure level threshold to determine whether the pressure level indication exceeds the pressure level threshold; and
(c) in response to determining at step (b) that the pressure level indication exceeds the pressure level threshold, repeating steps (a) and (b), or
(d) in response to determining at step (b) that the pressure level indication does not exceed the pressure level threshold, generating an activation signal to initiate a system filling routine to supply a flow of liquid (206) from the liquid reservoir (201) to the outlet port (204) connected to the fluid circuit (101), wherein the flow of liquid (206) from the liquid reservoir (201) is treated by ultraviolet light incident thereon before passing through said outlet port (204).

8. A method as claimed in claim 7, further comprising the steps of:
(e) measuring a pressure level of system liquid in the fluid circuit (101) to obtain a subsequent pressure level indication;
(f) comparing the subsequent pressure level indication obtained at step (e) with said pressure level threshold to determine whether the subsequent pressure level indication exceeds the pressure level threshold; and
(g) in response to determining at step (f) that the subsequent pressure level indication does not exceed the pressure level threshold, repeating steps (e) and (f), or
(h) in response to determining at step (f) that the subsequent pressure level indication exceeds the pressure level threshold, generating a deactivation signal to conclude said system filling routine and repeating steps (a) and (b).

9. A method as claimed in claim 7 or claim 8, wherein during said system filing routine a flow of an additive (212) from an additive reservoir (211) is supplied to said flow of liquid (206) from said liquid reservoir (201) to said outlet port (204) along said flow path (207).

10. A method as claimed in claim 9, wherein during said system filing routine said flow of liquid (206) from said liquid reservoir (201) to said outlet port 9204) is supplied under the operation of the pump (205), and said flow of an additive (212) is supplied to said flow of liquid (206) from said liquid reservoir (201) to said outlet port (204) at a position along said flow path (207) that is downstream of said pump (205).

11. A method as claimed in claim 10, wherein said additive (212) comprises a corrosion inhibitor.

12. A method as claimed in any of claims 7 to 11, wherein said liquid reservoir (201) is connected to a cold mains water supply.

13. A method as claimed in any of claims 7 to 12, wherein said light source (208) is configured to emit ultraviolet light incident on liquid (206) flowing from said liquid reservoir (201) to said outlet port (204) at a position along said flow path (207) that is upstream of said pump (205).

14. A method as claimed in claim 9 or claim 10, wherein said flow of an additive (212) from an additive reservoir (211) is supplied to said flow of liquid (206) from said liquid reservoir (201) via a proportional dosage valve.

## Patentansprüche

1. Heiz- oder Kühlsystem (102), umfassend einen Fluidkreislauf (101) und einen Apparat (110) zum Zuführen eines Flusses von Aufstockflüssigkeit zu dem Fluidkreislauf (101) des Heiz- oder Kühlsystems (102), wobei der Apparat (110) umfasst:
ein Flüssigkeitsreservoir (201), umfassend einen Einlassanschluss (202), der mit einer Flüssigkeitsquelle (112) verbunden ist, um dem Flüssigkeitsreservoir (201) eine Flüssigkeit (202) zuzuführen, und einen Auslass (203);
einen Auslassanschluss (204), der mit dem Fluidkreislauf (101) verbunden ist, und
eine Pumpe (205), die funktionell ist, um Flüssigkeit (206) aus dem Flüssigkeitsreservoir (201) entlang eines Flusspfads (207) zu dem Auslassanschluss (204) zu bewegen, **dadurch gekennzeichnet, dass**
der Apparat (110) des Weiteren eine Lichtquelle (208) umfasst, die funktionell ist, um Ultraviolettlicht zu emittieren, das auf Flüssigkeit (206) einfällt, die aus dem Flüssigkeitsreservoir (201) entlang des Flusspfads (207) zu dem Auslassanschluss (204) fließt.

2. Heiz- oder Kühlsystem (102) nach Anspruch 1, wobei die Lichtquelle (208) ausgestaltet ist, um Ultraviolettlicht, das auf Flüssigkeit (206) einfällt, die aus dem Flüssigkeitsreservoir (201) zu dem Auslassanschluss (204) fließt, an einer Position entlang des Flusspfads (207), die sich stromaufwärts von der Pumpe (205) befindet, zu emittieren.

3. Heiz- oder Kühlsystem (102) nach Anspruch 1 oder Anspruch 2, des Weiteren umfassend ein Dosierventil (209) zum Verbinden mit einem Auslass (210) eines Additivreservoirs (211), so dass das Dosierventil (209) funktionell ist, um Flüssigkeit (206), die aus dem Flüssigkeitsreservoir (201) entlang des Flusspfads (207) zu dem Auslassanschluss (204) fließt, einen Fluss eines Additivs (212) aus dem Additivreservoir (211) zuzuführen.

4. Heiz- oder Kühlsystem (102) nach Anspruch 3, wobei das Dosierventil (209) funktionell ist, um Flüssigkeit (206), die aus dem Flüssigkeitsreservoir (211) entlang des Flusspfads (207) zu dem Auslassanschluss (204) fließt, an einer Position entlang des Flusspfads (207), die sich stromabwärts von der Pumpe (205) befindet, einen Fluss eines Additivs (212) aus dem Additivreservoir (211) zuzuführen.

5. Heiz- oder Kühlsystem (102) nach Anspruch 3 oder Anspruch 4, wobei das Dosierventil (209) ein Proportionaldosierventil ist.

6. Heiz- oder Kühlsystem (102) nach einem der Ansprüche 1 bis 5, wobei die Flüssigkeitsquelle (112) kaltes Wasser aus dem Wasserversorgungsnetz ist.

7. Verfahren zum Zuführen eines Flusses von Aufstockflüssigkeit zu einem Fluidkreislauf (102) eines Heiz- oder Kühlsystems (102), wobei das Heiz- oder Kühlsystem (102) gemäß Anspruch 1 ist, wobei das Verfahren die Schritte umfasst:
(a) Messen eines Druckniveaus der Systemflüssigkeit in dem Fluidkreislauf (101), um eine Druckniveauangabe zu erhalten;
(b) Vergleichen der Druckniveauangabe, die in Schritt (a) erhalten wurde, mit einem Druckniveauschwellenwert, um zu bestimmen, ob die Druckniveauangabe den Druckniveauschwellenwert übersteigt; und
(c) in Reaktion auf Bestimmen in Schritt (b), dass die Druckniveauangabe den Druckniveauschwellenwert übersteigt, Wiederholen der Schritte (a) und (b), oder
(d) in Reaktion auf Bestimmen in Schritt (b), dass die Druckniveauangabe den Druckniveauschwellenwert nicht übersteigt, Generieren eines Aktivierungssignals, um eine Systemfüllroutine zu initiieren, um einen Fluss der Flüssigkeit (206) aus dem Flüssigkeitsreservoir (201) zu dem Auslassanschluss (204) zuzuführen, der mit dem Fluidkreislauf (101) verbunden ist, wobei der Fluss der Flüssigkeit (206) aus dem Flüssigkeitsreservoir (201) mit Ultraviolettlicht, das darauf einfällt, behandelt wird, bevor der Auslassanschluss (204) durchlaufen wird.

8. Verfahren nach Anspruch 7, des Weiteren umfassend die Schritte:
(e) Messen eines Druckniveaus der Systemflüssigkeit in dem Fluidkreislauf (101), um eine nachfolgende Druckniveauangabe zu erhalten;
(f) Vergleichen der nachfolgenden Druckniveauangabe, die in Schritt (e) erhalten wurde, mit dem Druckniveauschwellenwert, um zu bestimmen, ob die nachfolgende Druckniveauangabe den Druckniveauschwellenwert übersteigt; und
(g) in Reaktion auf Bestimmen in Schritt (f), dass die nachfolgende Druckniveauangabe den Druckniveauschwellenwert nicht übersteigt, Wiederholen der Schritte (e) und (f), oder
(h) in Reaktion auf Bestimmen in Schritt (f), dass die nachfolgende Druckniveauangabe den Druckniveauschwellenwert übersteigt, Generieren eines Deaktivierungssignals, um die Systemfüllroutine zu beenden, und Wiederholen der Schritte (a) und (b).

9. Verfahren nach Anspruch 7 oder Anspruch 8, wobei während der Systemfüllroutine dem Fluss der Flüssigkeit (206) aus dem Flüssigkeitsreservoir (201) entlang des Flusspfads (207) zu dem Auslassanschluss (204) ein Fluss eines Additivs (212) aus einem Additivreservoir (211) zugeführt wird.

10. Verfahren nach Anspruch 9, wobei während der Systemfüllroutine der Fluss der Flüssigkeit (206) aus dem Flüssigkeitsreservoir (201) zu dem Auslassanschluss (204) unter Betrieb der Pumpe (205) zugeführt wird, und der Fluss eines Additivs (212) dem Fluss der Flüssigkeit (206) aus dem Flüssigkeitsreservoir (201) zu dem Auslassanschluss (204) an einer Position entlang des Flusspfads (207) zugeführt wird, die sich stromabwärts von der Pumpe (205) befindet.

11. Verfahren nach Anspruch 10, wobei das Additiv (212) ein Korrosionsschutzmittel umfasst.

12. Verfahren nach einem der Ansprüche 7 bis 11, wobei das Flüssigkeitsreservoir (201) mit einem Wasserversorgungsnetz für kaltes Wasser verbunden ist.

13. Verfahren nach einem der Ansprüche 7 bis 12, wobei die Lichtquelle (208) ausgestaltet ist, um Ultraviolettlicht, das auf Flüssigkeit (206) einfällt, die aus dem Flüssigkeitsreservoir (201) zu dem Auslassanschluss (204) fließt, an einer Position entlang des Flusspfads (207), die sich stromaufwärts von der Pumpe (205) befindet, zu emittieren.

14. Verfahren nach Anspruch 9 oder Anspruch 10, wobei dem Fluss der Flüssigkeit (206) aus dem Flüssigkeitsreservoir (201) der Fluss eines Additivs (212) aus einem Additivreservoir (211) über ein Proportionaldosierventil zugeführt wird.

## Revendications

1. Système de chauffage ou de refroidissement (102) comprenant un circuit de fluide (101) et un appareil (110) pour introduire un écoulement de liquide d'appoint dans le circuit de fluide (101) du système de chauffage ou de refroidissement (102), ledit appareil (110) comprenant :
un réservoir de liquide (201) comprenant un orifice d'entrée (202) relié à une source de liquide (112) pour introduire dans le réservoir de liquide (201) un liquide (202), et une évacuation (203) ;
un orifice d'évacuation (204) relié au circuit de fluide (101), et
une pompe (205) exploitable pour déplacer un liquide (206) depuis ledit réservoir de liquide (201) vers ledit orifice d'évacuation (204) le long d'un chemin d'écoulement (207) ; **caractérisé en ce que**
ledit appareil (110) comprend en outre une source de lumière (208) exploitable pour émettre une lumière ultraviolette incidente sur le liquide (206) s'écoulant depuis ledit réservoir de liquide (201) vers ledit orifice d'évacuation (204) le long dudit chemin d'écoulement (207).

2. Système de chauffage ou de refroidissement (102) selon la revendication 1, dans lequel ladite source de lumière (208) est configurée pour émettre une lumière ultraviolette incidente sur le liquide (206) s'écoulant depuis ledit réservoir de liquide (201) vers ledit orifice d'évacuation (204) au niveau d'une position le long dudit chemin d'écoulement (207) qui est en amont de ladite pompe (205).

3. Système de chauffage ou de refroidissement (102) selon la revendication 1 ou la revendication 2, comprenant en outre une vanne de dosage (209) destinée à être raccordée à une évacuation (210) d'un réservoir d'additif (211) de telle sorte que la vanne de dosage (209) soit exploitable pour introduire un écoulement d'un additif (212) provenant du réservoir d'additif (211) dans le liquide (206) s'écoulant depuis ledit réservoir de liquide (201) vers ledit orifice d'évacuation (204) le long dudit chemin d'écoulement (207).

4. Système de chauffage ou de refroidissement (102) selon la revendication 3, dans lequel ladite vanne de dosage (209) est exploitable pour introduire un écoulement d'un additif (212) provenant du réservoir d'additif (211) dans le liquide (206) s'écoulant depuis ledit réservoir de liquide (211) vers ledit orifice d'évacuation (204) le long dudit chemin d'écoulement (207) au niveau d'une position le long dudit chemin d'écoulement (207) qui est en aval de ladite pompe (205).

5. Système de chauffage ou de refroidissement (102) selon la revendication 3 ou la revendication 4, dans lequel ladite vanne de dosage (209) est une vanne de dosage proportionnelle.

6. Système de chauffage ou de refroidissement (102) selon l'une quelconque des revendications 1 à 5, dans lequel ladite source de liquide (112) est une alimentation en eau froide de réseau.

7. Procédé d'introduction d'un écoulement de liquide d'appoint dans un circuit de fluide (102) d'un système de chauffage ou de refroidissement (102), le système de chauffage ou de refroidissement (102) selon la revendication 1, ledit procédé comprenant les étapes de :
(a) mesure d'un niveau de pression du liquide du système dans le circuit de fluide (101) pour obtenir une indication du niveau de pression ;
(b) comparaison de l'indication de niveau de pression obtenue à l'étape (a) avec un seuil de niveau de pression pour déterminer si l'indication de niveau de pression dépasse le seuil de niveau de pression ; et
(c) en réponse à la détermination à l'étape (b) que l'indication de niveau de pression dépasse le seuil de niveau de pression, répéter les étapes (a) et (b), ou
(d) en réponse à la détermination à l'étape (b) que l'indication de niveau de pression ne dépasse pas le seuil de niveau de pression, générer un signal d'activation pour lancer une routine de remplissage du système afin d'introduire un écoulement de liquide (206) depuis le réservoir de liquide (201) vers l'orifice d'évacuation (204) relié au circuit de fluide (101), dans lequel l'écoulement de liquide (206) depuis le réservoir de liquide (201) est traité par une lumière ultraviolette incidente sur celui-ci avant de passer par ledit orifice d'évacuation (204).

8. Procédé selon la revendication 7, comprenant en outre les étapes de :
(e) mesure d'un niveau de pression du liquide du système dans le circuit de fluide (101) pour obtenir une indication de niveau de pression ultérieure ;
(f) comparaison de l'indication de niveau de pression ultérieure obtenue à l'étape (e) avec ledit seuil de niveau de pression pour déterminer si l'indication de niveau de pression ultérieure dépasse le seuil de niveau de pression ; et
(g) en réponse à la détermination à l'étape (f) que l'indication de niveau de pression ultérieure ne dépasse pas le seuil de niveau de pression, répéter les étapes (e) et (f), ou
(h) en réponse à la détermination à l'étape (f) que l'indication de niveau de pression ultérieure dépasse le seuil de niveau de pression, générer un signal de désactivation pour conclure ladite routine de remplissage du système et répéter les étapes (a) et (b).

9. Procédé selon la revendication 7 ou la revendication 8, dans lequel, au cours de ladite routine de remplissage du système, un écoulement d'un additif (212) provenant d'un réservoir d'additif (211) est introduit dans ledit écoulement de liquide (206) depuis ledit réservoir de liquide (201) vers ledit orifice d'évacuation (204) le long dudit chemin d'écoulement (207).

10. Procédé selon la revendication 9, dans lequel pendant ladite routine de remplissage du système, ledit écoulement de liquide (206) depuis ledit réservoir de liquide (201) vers ledit orifice d'évacuation (204) est introduit sous l'effet du fonctionnement de la pompe (205), et ledit écoulement d'un additif (212) est introduit dans ledit écoulement de liquide (206) depuis ledit réservoir de liquide (201) vers ledit orifice d'évacuation (204) au niveau d'une position le long dudit chemin d'écoulement (207) qui est en aval de ladite pompe (205).

11. Procédé selon la revendication 10, dans lequel ledit additif (212) comprend un inhibiteur de corrosion.

12. Procédé selon l'une quelconque des revendications 7 à 11, dans lequel ledit réservoir de liquide (201) est relié à une alimentation en eau froide de réseau.

13. Procédé selon l'une quelconque des revendications 7 à 12, dans lequel ladite source lumineuse (208) est configurée pour émettre une lumière ultraviolette incidente sur le liquide (206) s'écoulant depuis ledit réservoir de liquide (201) vers ledit orifice d'évacuation (204) au niveau d'une position le long dudit chemin d'écoulement (207) qui est en amont de ladite pompe (205).

14. Procédé selon la revendication 9 ou la revendication 10, dans lequel ledit écoulement d'un additif (212) provenant d'un réservoir d'additif (211) est introduit dans ledit écoulement de liquide (206) depuis ledit réservoir de liquide (201) par l'intermédiaire d'une vanne de dosage proportionnelle.
